# EUROPÄISCHE PATENTSCHRIFT

(11) **EP 2 646 716 B1**
(45) Veröffentlichungstag und Bekanntmachung des Hinweises auf die Patenterteilung: **19.08.2015**
(21) Anmeldenummer: 11758224.7
(22) Anmeldetag: 21.09.2011
(51) Int. Cl.: F16J 15/00, F16J 15/28, F16J 15/56

(54) **DICHTUNGSANORDNUNG FÜR EINE KOLBENSTANGE**
SEAL ARRANGEMENT FOR A PISTON ROD
ENSEMBLE D'ÉTANCHÉITÉ POUR UNE TIGE DE PISTON

(30) Priorität: 02.12.2010 DE 102010053271
(43) Veröffentlichungstag der Anmeldung: 09.10.2013
(73) Patentinhaber: Geist, Bertwin R., 82547 Eurasburg (DE)
(72) Erfinder: FICHT, Reinhold, 85614 Kirchseeon (DE)
(74) Vertreter: nospat Patent- und Rechtsanwälte GbR
(86) Internationale Anmeldenummer: PCT/EP2011/066466
(87) Internationale Veröffentlichungsnummer: WO 2012/072295

(56) Entgegenhaltungen:
- CH-A- 93 880
- DE-B- 1 144 873
- FR-A- 395 855

## Beschreibung

Die Erfindung betrifft eine Anordnung zum Abdichten einer sich bezüglich einer Durchtrittsöffnung im Wesentlichen geradlinig hin und her bewegenden Kolbenstange einer Hubkolbenmaschine eine nach dem Oberbegriff des Anspruchs 1 sowie eine Hubkolbenmaschine nach dem Oberbegriff des Anspruchs 21.

Eine Gattungsbildende Anordnung zum Abdichten ist beispielsweise aus der DE 32 18 255 A1 bekannt. Eine derartige Dichtungsanordnung ist für den Betrieb in einem sogenannten Kurbelschlaufenmotor vorgesehen, für den u. a. charakteristisch ist, dass sich Kolbenstangen zwischen Arbeitskolben und dem Kurbeltrieb ausschließlich geradlinig entlang ihrer Längsachse bewegten. Üblicherweise sind bei solchen Motoren die Kurbelgehäuse von den Zylinderräumen durch eine Trennwand getrennt, wobei die Kolbenstange diese Trennwand im Bereich einer Durchtrittsöffnung durchdringt.

Insbesondere bei Zweitaktbrennkraftmaschinen eröffnet dies die Möglichkeit, einen Zylinderraum zwischen Trennwand und Kolben, der kurbelgehäuseseitig durch die Trennwand abgedichtet wird, als Möglichkeit zum Aufladen des Motors also z. B. als Frischgaspumpe zum Aufladen des Motors zu nutzen.

Die oben genannte Schrift schlägt vor, im Bereich des Trennwanddurchtrittes die Kolbenstange mittels einer Führungshülse in Radialrichtung zu führen und somit definiert zu lagern. Es wird ein einzelner Dichtungsring vorgeschlagen, der nach Art eines innenspannenden Dichtrings ausgebildet ist und in einem Ringkörper sitzt. Bezüglich der Durchtrittsöffnung sitzt der Dichtring der Zylinderseite des Kurbelschlaufenmotors zugewandt, so dass die die Kolbenstange radial lagernde Führungshülse von Öl aus dem Kurbelgehäuse mitversorgt werden kann. Diese Abdichtung hat sich zwar bewährt. Insbesondere hat sie sich bei Motoren, die mit Otto- oder Dieselkraftstoff betrieben werden bewährt. Ein Ölaustritt aus dem Kurbelgehäuse hin in den Zylinderraum konnte jedoch nicht immer 100%-ig vermieden werden, da der eine vorgeschlagene Dichtungsring sowohl Gasdrücke aus dem Zylinderraum in Richtung Kurbelgehäuse abzudichten hat wie auch eine Ölabstreiffunktion von von der Kolbenstange aus dem Kurbelgehäuse durch die Führungshülse mitgeschlepptem Öl zu bewerkstelligen hat.

FR 395 855 offenbart eine Anordnung mit den Merkmalen des Oberbegriffs des Anspruchs 1.

Aufgabe der Erfindung ist es daher, eine insbesondere für schnell laufende Hubkolbenmaschinen, insbesondere Motoren und Kompressoren in der Kurbelschlaufenbauart geeignete Anordnung zum Abdichten von durch Trennwände verlaufenden Kolbenstangen der Hubkolbenmaschine anzugeben, bei der Ölaustritt aus dem Kurbelgehäuse in einen Zylinderraum einerseits und Gasdruckverluste aus einem Zylinderraum, der z. B. durch den Kolbenboden und eine Trennwand des Hubkolbenmaschine begrenzt wird, möglichst zu vermeiden und eine weiter optimierte Abdichtung zur Verfügung zu stellen. Insbesondere soll auch Wert darauf gelegt werden, die Dichtung in einfacher Art und Weise mit wenigen unterschiedlichen Teilen herstellbar zu gestalten. Insbesondere sollen abdichtende Dichtungsringe einfach umstellbar sein. Ein besonderes Augenmerk soll darauf gerichtet werden, die Dichtungsanordnung modulartig vormontiert bereitstellen zu können.

Darüber hinaus soll die Erfindung insbesondere für schnell laufende Motoren, bei denen als Maximum Kolbengeschwindigkeiten von etwa 20 bis 26 m/sec., was ebenfalls der maximalen Kolbenstangengeschwindigkeit entspricht, auftreaen können, geeignet sein. Insbesondere soll eine Dichtungsanordnung angegeben werden, die sich für Hubkolbenmaschinen eignet, die als Gasmotor bevorzugt im Stationärbetrieb, d. h. mit im Langzeitbetrieb sich nur geringfügig ändernden Drehzahlen betrieben wird.

Diese Aufgaben werden mit einer Anordnung zum Abdichten mit den Merkmalen des Anspruchs 1 sowie mit einer Hubkolbenmaschine mit den Merkmalen des Anspruchs 15 gelöst. Vorteilhafte Ausführungsformen sind in den jeweils abhängigen Unteransprüchen angegeben.

Die Erfindung geht von einer Anordnung zum Abdichten einer sich bezüglich einer Durchtrittsöffnung im Wesentlichen geradlinig hin und her bewegenden Kolbenstange einer Hubkolbenmaschine aus, wobei die Kolbenstange umgebende Dichtmittel nach Art eines innenspannenden Dichtrings vorhanden sind. Der Dichtring ist im Bereich der Durchtrittsöffnung bezüglich eines Dichtungsgehäuses im Wesentlichen ortsfest angeordnet. Unter "im Wesentlichen ortsfest" ist dabei zu verstehen, dass der Dichtring in einer Axialrichtung, d. h. einer Längsrichtung der Kolbenstange ortsfest, d. h. spielfrei oder mit geringem Spiel angeordnet ist und in einer Radialrichtung bezüglich der Kolbenstange, d. h. insbesondere senkrecht zur Axialrichtung schwimmend gelagert ist, so dass der Dichtring in dieser Radialrichtung ggf. auftretende Bewegungen der Kolbenstange beweglich mit vollführen kann. Derartige Bewegungen in Radialrichtung der Kolbenstange sind rein kinematisch gesehen bei einem Kurbelschlaufentrieb theoretisch nicht vorgesehen, jedoch treten diese Radialbewegungen in der Praxis in geringem Maße, d. h. im Bereich von wenigen 1/100 mm und/oder maximal wenigen 1/10 mm auf, wenn die Hubkolbenmaschine betrieben wird. Hierbei können durch dynamische Kräfte im Kurbeltrieb Schwingungen oder sogar Durchbiegungen der Kolbenstange durch Explosionsbruch auf den Kolben induziert werden, die sich in einer minimalen radialen Auslenkung von Kolbenstangenbereichen niederschlagen. Ausgehend davon ist die Erfindung dadurch weitergebildet, dass die Dichtungsringe in einer Radialrichtung beweglich, insbesondere schwimmend im Dichtungsgehäuse gelagert sind. Gegenüber dem Stand der Technik wird auch eine Mehrzahl, d. h. wenigstens zwei solcher Dichtringe vorgeschlagen. Zwischen zumindest zwei solchen Dichtringen ist eine Abstandshaltereinrichtung angeordnet, die radial außenseitig im Dichtungsgehäuse spielfrei oder mit nur geringem Spiel geführt ist und radial innenseitig zur Kolbenstange hin ein gegenüber dem außenseitigen Spiel radial größeres Spiel aufweist. Hierdurch wird erreicht, dass die Abstandshaltereinrichtung lediglich im Dichtungsgehäuse geführt ist und in jedem Betriebszustand einen radialen Abstand zur Kolbenstange einhält und diese nicht berührt.

Die Abstandshaltereinrichtung ist bevorzugt als Abstandshalterring ausgebildet und bildet mit den Dichtringen und einem Teilbereich der Außenseite der Kolbenstange eine Staukammer, in der abzudichtendes Medium, z. B. Öl aus dem Kurbelgehäuse der Hubkolbenmaschine aufgefangen werden kann. Damit eventuell aufgefangenes Medium, z. B. Öl aus der Staukammer abgeführt werden kann, weist der Abstandshalterring zumindest einen Durchgang zum Ableiten von Medium aus der Staukammer heraus in eine Umgebung auf.

Hierdurch gelingt es mit der Erfindung insbesondere, die innenspannenden Dichtungsringe hinsichtlich ihrer geometrischen Ausgestaltung einfach aufzubauen. Es genügt beispielsweise ein im Querschnitt rechteckiger Dichtungsring. Kanäle, die notwendig sind um abgestreiftes bzw. abzudichtendes Medium aus der Staukammer wegzuführen sind erfindungsgemäß in der Abstandshaltereinrichtung angeordnet, die für sich selbst keine Abdichtungsfunktion ggü. der Kolbenstange erfüllen muss.

In bevorzugter Art und Weise sind durch die Verwendung mehrerer Dichtungsringe und mehrerer Abstandshaltereinrichtungen, die bevorzugt als Abstandshalterringe ausgebildet sind eine Mehrzahl, d. h. mindestens zwei Staukammern gebildet.

Gemäß einer besonderen Ausführungsform weist das Dichtungsgehäuse Mittel zum Ableiten von aus der Staukammer austretendem Medium auf. Diese Mittel können im Dichtungsgehäuse vorgesehenne Kanäle sein, welche mit z. B. einer Saugpumpe in Verbindung stehen, wobei die Saugpumpe Medium aus dem Dichtungsgehäuse und damit indirekt aus den Staukammern absaugen kann.

Gemäß einer besonderen Ausführungsform der Erfindung bilden zumindest zwei Dichtungsringe und zumindest ein Abstandshalterring ein Dichtungspaket, welches in axialer Richtung, d. h. in der Bewegungsrichtung der Kolbenstange spielfrei oder nahezu spielfrei im Dichtungsgehäuse sitzt. Hierbei sind zumindest die Dichtungsringe radial schwimmend gelagert, so dass eventuelle minimale Auslenkungen in Radialrichtung der Kolbenstange aufgefangen werden können, indem sich die Dichtungsringe mitbewegen. In Axialrichtung kann das Dichtungspaket vorgespannt eingesetzt sein, so dass in Axialrichtung weder die Dichtungsringe noch die Abstandshalter eine Bewegung ausführen können. Die Vorspannung ist dabei derart gewählt, dass die oben genannte radiale Beweglichkeit (schwimmende Lagerung) der Dichtungsringe gewährleistet bleibt. Hierfür eignet sich insbesondere z. B. ein axial wirkender Federring, der das Dichtungspaket innerhalb des Dichtungsgehäuses vorgespannt spielfrei hält.

Die Erfindung ermöglicht es, die Dichtungsringe im Querschnitt geometrisch besonders einfach, z. B. rechteckförmig und insbesondere einstückig als innenspannenden Federdichtringe auszubilden, wobei nur eine einzige Stoßstelle vorhanden ist um den Dichtungsring ein Stück aufweitbar zu gestalten. Im Betrieb sitzt der Dichtungsring federnd vorgespannt außenseitig auf der Kolbenstange auf.

Damit die Dichtungswirkung erhöht ist, ist die Stoßstelle als Schrägschnitt durch den Dichtungsring ausgebildet, so dass bei einer axialen Belastung des Dichtungsrings die freien Enden des Dichtungsrings in der Umgebung der Stoßstelle flächig aufeinander liegen und somit die Stoßstelle wirkungsvoll abdichten.

Als besonders bevorzugt hat sich herausgestellt, den Schrägschnitt in einem Winkel α zur Ebene des Dichtungsrings von 10° bis 45°, insbesondere von 10° bis 30° anzuordnen um einen besonders großen Überlappungsbereich der freien Enden des Dichtungsrings zu erreichen.

Bei den erfindungsgemäß geringen Abmessungen der Dichtungsringe und der Abstandshalterringe hat es sich bewährt, den Schrägschnitt zur Ausbildung der Stoßstelle des Dichtungsrings als Laserschnitt auszuführen. Ein solcher Schnitt weist eine besonders geringe Schnittbreite auf, so dass beim axialen Verpressen oder beim axialen Vorspannen eines solchen Dichtungsrings die Schnittfuge in besonders wirksamer Weise durch aufeinanderlegen der gegenüberliegenden Schnittflächen abgedichtet werden kann.

Die erfindungsgemäße Anordnung eignet sich insbesondere zum Aufbau einer besonders klein bauenden Dichtungsanordnung, wobei die Dichtungsringe insbesondere eine Dicke d_{D} von 1 mm bis 1,8 mm, besonders bevorzugt eine Dicke d_{D} von 0,85 mm bis 1,8 mm, idealerweise eine Dicke d_{D} von 0,95 mm bis 1,3 mm aufweisen. Selbstverständlich kann es bei besonders dicken Kolbenstangen notwendig sein, ggf. die Werte für die Dicke der Dichtungsringe etwas nach oben hin zu überschreiten. Bei Kolbenstangendurchmessern zwischen 15 mm und 30 mm, die in überwiegendem Maße bei schnell laufenden Hubkolbenmaschinen auftreten, haben sich oben genannte Maße besonders bewährt.

In bevorzugter Art und Weise sind die Abstandshalterringe im Querschnitt im Wesentlichen H-förmig ausgebildet, wobei außenseitige, in der Zeichnung dargestellte vertikale, Stege zur Anlage mit axialen Stirnseiten der Dichtungsringe ausgebildet sind und somit eine große Kontaktfläche zur Führung der Dichtungsringe, insbesondere während der radial schwingenden Auslenkung der Dichtungsringe, zur Verfügung stellen.

In einer Ausführungsform der Abstandshalterringe weist der Quersteg des im Wesentlichen H-förmigen Querschnitts der Abstandshalterringe Durchbrüche auf, welche insbesondere als Bohrungen ausgeführt sind, die bevorzugt in Radialrichtung laufen und eine Verbindung der Staukammer zu einer Außenumgebung im Dichtungsgehäuse für abgestreiftes und in der Staukammer aufgefangenes Medium bilden.

Zweckmäßigerweise können selbstverständlich auch eine Vielzahl von Bohrungen über den Umfang verteilt radial strahlenförmig in den Abstandshalterringe vorgesehen sein.

Erfindungsgemäß weisen die Abstandshalterringe außenseitig umfänglich eine zinnenförmige Kontur auf, so dass Durchtrittskanäle zwischen dem Dichtungsgehäuse und den Abstandshalterringe gebildet sind untereinander in Axialrichtung miteinander kommunizieren. Hierdurch wird gewährleistet, dass für die Absaugung von abgestreiftem Medium aus mehreren Staukammern dieses Medium in eine zwischen dem Dichtungsgehäuse und den Abstandshalterringen gebildete Auffangkammer geleitet wird, von der aus dann bevorzugt eine einzige Absaugleitung im Zusammenspiel mit einer Saugpumpe das abgestreifte Medium abzuführen vermag.

In einer anderen Ausführungsform der Abstandshalterringe können diese im Querschnitt ebenfalls - wie die Dichtungsringe - rechteckförmig ausgebildet sein und weisen an ihren den Dichtungsringen zugewandten Stirnseiten im Wesentlichen radial nach außen verlaufende Kanäle im Form von Nuten oder anderweitigen rillenartigen Vertiefungen auf. Auch diese Ausgestaltung gewährleistet, dass Medium, welches in der Staukammer abgestreift wurde bzw. dort vorliegt aus dieser über die Rillen/Nuten nach außen in die Auffangkammer des Dichtungsgehäuses gelangen kann.

Für die Abstandshalterringe haben sich insbesondere bei oben erwähnten Dicken der Kolbenstangen Maße für die Dicke d_{A} bewährt, die in den Bereichen zwischen 2,5 mm bis 4 mm, insbesondere 2,5 mm bis 3,5 mm liegen. Bei einer derartigen Wahl der Dicke d_{A} der Abstandshalterringe und der oben erwähnten Dicke d_{D} der Dichtungsringe lassen sich besonders kompakte und überraschenderweise hochgradig dichte Dichtungspakete bilden, die eine besonders geringe axiale Längserstreckung aufweisen, was insbesondere bei klein bauenden Motoren/Kompressoren von besonderem Vorteil ist.

Als Gesamtaxialspiel des Dichtungspakets oder der Dichtungspakete im Dichtungsgehäuse hat sich ein Maß von etwa 0,05 mm bis 0,15 mm, insbesondere 0,05 mm bis 0,1 mm bewährt. Je mehr Dichtungspakete vorgesehen werden, desto größer sollte das maximale Gesamtachsspiel im Bereich oben genannter Grenzen gewählt werden.

Zusätzlich zum Vorsehen von Dichtungspaketen kann zwischen zwei weiteren Dichtungsringen anstelle oder zusätzlich zu den Abstandshalterringen eine Lagerbuchse eingesetzt sein, die zur radialen Abstützung der Kolbenstange im Bereich der Durchtrittsöffnung dient oder zumindest beiträgt.

Zweckmäßigerweise ist das Dichtungsgehäuse mittels eines Dichtungsgehäusedeckels verschließbar und insbesondere zusammen mit dem Deckel an einer Trennwand der Hubkolbenmaschine befestigbar. Hierdurch gelingt es, eine erfindungsgemäße Dichtungsanordnung modulartig vorzumontieren und als Ganzes in eine Hubkolbenmaschine einsetzbar zu gestalten. Dies reduziert insbesondere den erforderlichen Montageaufwand, wobei besonders angemerkt werden soll, dass eine Handhabung kleiner Teile, wie z. B. der Dichtungsringe und der Abstandshalterringe bequem noch außerhalb der Hubkolbenmaschine erfolgen kann. Montagefehler oder Montageungenauigkeiten werden hierdurch effizient vermieden.

Eine erfindungsgemäße Hubkolbenmaschine weist insbesondere einen Kurbeltrieb nach Art einer Kurbelschlaufe mit einer im Wesentlichen linear und geradlinig bewegten Kolbenstange und einer Trennwand zur Abtrennung des Kurbelgehäuses von einem Zylinderraum zwischen der Trennwand und einem Kolbenboden auf. Im Bereich dieser Trennwand ist die Durchtrittsöffnung für die Kurbelstange vorgesehen, welche mittels der erfindungsgemäßen Anordnung zum Abdichten abgedichtet ist.

In einer bevorzugten Ausführungsform ist die erfindungsgemäße Hubkolbenmaschine als Verbrennungskraftmaschine ausgebildet. Sie kann in Zweitaktbauweise ausgebildet sein, wobei jedoch selbstverständlich eine derartige Hubkolbenmaschine auch nach dem Viertaktprinzip betrieben werden kann.

In einer besonderen Ausführungsform ist die Hubkolbenmaschine als Gasmotor ausgebildet.

Gleichermaßen kann die Hubkolbenmaschine auch als fremdgetriebenes Aggregat, beispielsweise als Kompressor ausgebildet sein.

Im Folgenden wird die Erfindung anhand der Zeichnungen beispielhaft näher erläutert. Es zeigen:
- Figur 1:: eine erste Ausführungsform der erfindungsgemäßen Anordnung zum Abdichten in einer Querschnittsdarstellung;
- Figur 2:: eine Draufsicht auf einen Dichtungsring gemäß der Erfindung;
- Figur 3:: den Dichtungsring gemäß Figur 2 in einer Seitenansicht;
- Figur 4:: eine Draufsicht auf eine erste Ausführungsform eines Abstandshalterrings gemäß der Erfindung;
- Figur 5:: eine Querschnittsansicht des Abstandshalterrings gemäß Fig. 4 entlang der Linie A-A;
- Figur 6:: eine zweite Ausführungsform der erfindungsgemäßen Anordnung in einer Querschnittsdarstellung;
- Figur 7:: eine teilgeschnittene isometrische Ansicht einer Hubkolbenmaschine aufweisend eine Dichtungsanordnung gemäß der DE 32 18 225 A1 (Stand der Technik).

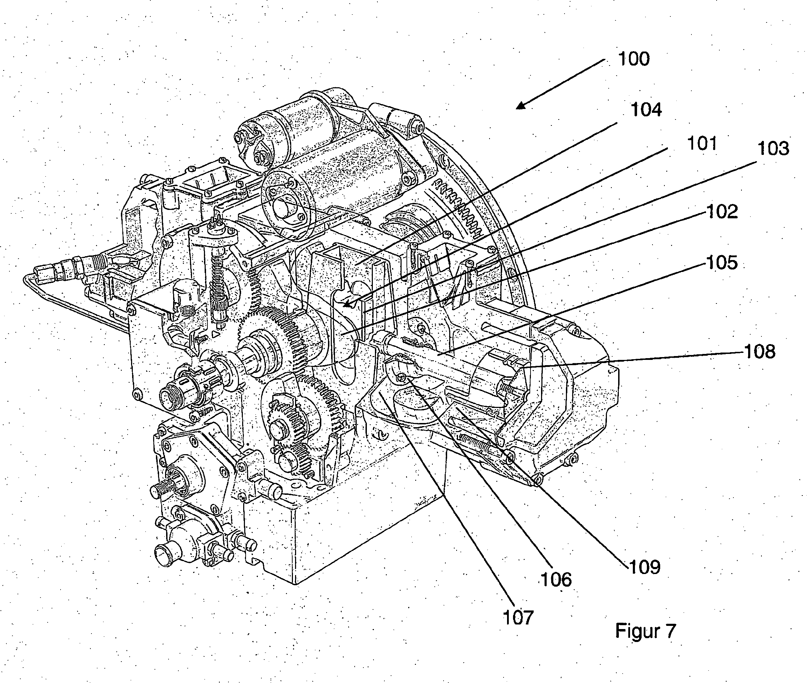

Figur 7 zeigt eine teilgeschnittene isometrische Ansicht einer Hubkolbenmaschine gemäß dem Stand der Technik aufweisend eine Dichtungsanordnung gemäß dem Stand der Technik nach der DE 32 18 225 A1. Die nachfolgende Kurzbeschreibung dieser Figur dient dazu, dass technische Umfeld der erfindungsgemäßen Dichtungsanordnung zu erläutern und den Einsatz der Dichtungsanordnung in einer Hubkolbenmaschine zu verdeutlichen.

Eine Hubkolbenmaschine 100 (Figur 7) besitzt einen Kurbeltrieb 101. Der Kurbeltrieb 101 weist eine Kurbelwelle 102 auf, auf deren Kurbelzapfen ein Gleitstein 103 sitzt. Der Gleitstein 103 sitzt mit seinen Gleitflächen in einer Kurbelschlaufe 104 und gleitet dort auf entsprechenden Gegengleitflächen ab. Die Kurbelschlaufe 104 steht mechanisch fest mit zumindest einer, im Ausführungsbeispiel mit zwei Kolbenstangen 105 in Verbindung. Die Kolbenstange 105 ist mittels eines Trennwandlagers 106 in Längsrichtung der Kolbenstange 105 geführt. Das Trennwandlager 106 sitzt in einer Trennwand 107 der Hubkolbenmaschine 100, wobei die Trennwand 107 einen Kurbelgehäuseraum, in dem sich der Kurbeltrieb (Gleitstein, Kurbelwelle und Kurbelschlaufe) befindet von einem Zylinderraum unterhalb eines Kolbens 108 abtrennt und diesen gegen das Kurbelgehäuse abdichtet. Dieser Zylinderraum unterhalb des Kolbens 108, der von der Trennwand und einem Zylinderkörper 109 begrenzt wird, kann bei einer Ausführungsform der Hubkolbenmaschine als nach dem Zweitaktprinzip funktionierende Brennkraftmaschine als Frischgaspumpe verwendet werden, wobei durch den hin und her gehenden Kolben 108 Frischgas aus dem Zylinderraum zwischen dem Trennwandlager 106 und dem Kolben 108 in einen Verbrennungsraum gepumpt werden kann. Das Trennwandlager 106 hat im Stand der Technik zum einen die Aufgabe in gewissem Maße fluid- und gasdicht das Kurbelgehäuse von dem Raum zwischen Trennwand 107 und Kolben 108 abzudichten. Andererseits hat das Trennwandlager 106 gemäß dem Stand der Technik die Aufgabe, die Kolbenstangen 105 in deren Längsrichtung verschieblich zu führen und diese in Radialrichtung 3b festzulegen.

Die nachfolgend beschriebene Erfindung beschäftigt sich mit einer Dichtungsanordnung zur Abdichtung der axial hin und her bewegbaren Kolbenstange 105 im Bereich der Trennwand 107 einer solchen Hubkolbenmaschine 100.

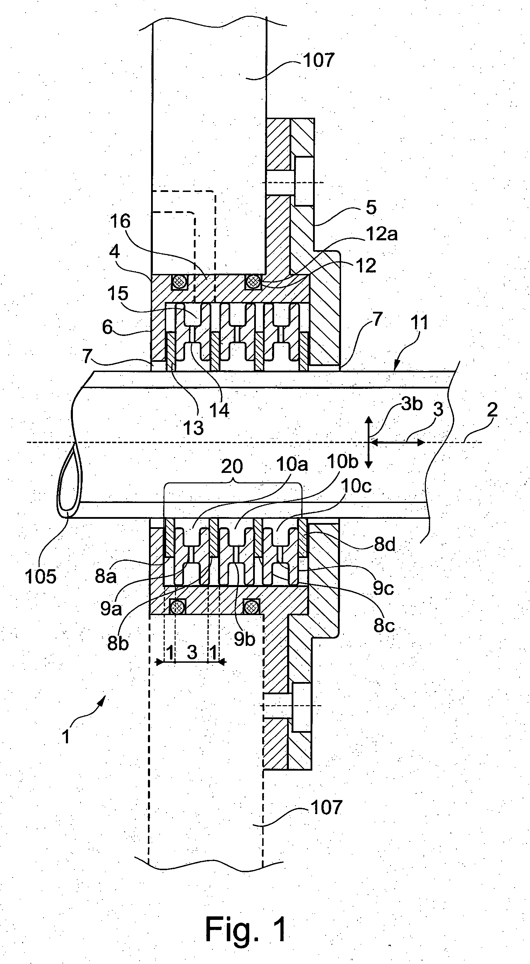

Eine erfindungsgemäße Dichtungsanordnung 1 ist in Figur 1 schematisch in einem Längsschnitt entlang einer Längsachse 2 einer Kolbenstange 105 dargestellt. Die Kolbenstange 105 bewegt sich in Richtung der Längsachse 2 im Betrieb einer Hübkolbenmaschine 100 axial oszillierend entlang der Doppelpfeilrichtung 3. Die erfindungsgemäße Dichtungsanordnung 1 besitzt ein erstes Dichtungsgehäuseteil 4 und ein zweites Dichtungsgehäuseteil 5, wobei das erste Dichtungsgehäuseteil 4 nach Art eines Dichtungen aufnehmenden Dichtungskorbes ausgebildet ist und das zweite Dichtungsgehäuseteil 5 nach Art eines Dichtungsgehäusedeckels ausgeführt ist. Das erste Dichtungsgehäuseteil 4 weist einen Gehäuseboden 6 auf, welcher eine Ausnehmung besitzt, die die Kolbenstange 105 durchgreift.

Das Ausführungsbeispiel gemäß Figur 1 besitzt ausgehend vom Gehäuseboden 6 insgesamt vier Dichtungsringe 8a, 8b, 8c, 8d. Der erste Dichtungsring 8a liegt dabei in Axialrichtung (Doppelpfeilrichtung 3) auf dem Gehäuseboden 6 an. Zwischen dem ersten Dichtungsring 8a und dem zweiten Dichtungsring 8b ist eine erste Abstandshaltereinrichtung 9a angeordnet. Jeweils zwischen dem zweiten Dichtungsring 8b und dem dritten Dichtungsring 8c sowie zwischen dem.dritten Dichtungsring 8c und dem vierten Dichtungsring 8d sind ebenfalls Abstandshaltereinrichtungen 9b und 9c angeordnet. Jeweils zwei Dichtungsringe 8a und 8b, 8b und 8c, 8c und 8d bilden zusammen mit den jeweils zwischen diesen Dichtungsringen angeordneten Abstandshaltereinrichtungen 9a, 9b, 9c ringförmige Staukammern 10a, 10b, 10c, welche außer den beteiligten Dichtungsringen und den beteiligten Abstandshaltereinrichtungen durch eine Außenoberfläche 11 der Kolbenstange 105 begrenzt sind. In der zeichnerischen Darstellung gemäß Figur 1 ist der Bereich links von dem ersten Dichtungsgehäuseteil 4 dem Kurbelgehäuse einer Hubkolbenmaschine 100 zuzuordnen, wohingegen der Bereich rechts von dem zweiten Dichtungsgehäuseteil 5 in der Zeichnung gemäß Figur 1 dem Raum unterhalb des Kolbens, der ggf. als Frischgaspumpe genutzt werden kann, zuzurechnen ist. Zur Verdeutlichung der Einbausituation ist eine Trennwand 107 schematisch dargestellt.

Das Dichtungsgehäuseteil 4 weist außenseitig umlaufende Nuten 12 auf, in dem beispielsweise O-Ringe 12a sitzen, welche im montierten Zustand das erste Dichtungsgehäuseteil 4 gegenüber der Trennwand 107 abdichten.

Die Dichtungsringe 8a, 8b, 8c, 8d sind als sogenannte innenspannende Dichtungsringe ausgebildet und liegen mit ihren Dichtungskanten 13 vorgespannt auf der Außenoberfläche 11 der Kolbenstange 105 auf. In einer Radialrichtung 3b, welche senkrecht auf der Axialrichtung 3 steht sind die Dichtungsringe 8a, 8b, 8c, 8d mit großem Spiel in das erste Dichtungsgehäuseteil 4 eingesetzt. Hierdurch erfolgt die radiale Führung der Dichtungsringe 8a, 8b, 8c, 8d ausschließlich über die Außenoberfläche 11 der Kolbenstange 105.

Die Abstandshalterringe 9a, 9b, 9c sitzen in Radialrichtung 3b außenseitig geführt im Dichtungsgehäuseteil 4 und weisen zur Außenoberfläche 11 der Kolbenstange 105 hin einen Abstand auf, der mindestens so groß ist, dass in keiner denkbaren Betriebssituation die Abstandshalterringe die Außenoberfläche 11 der Kolbenstange berühren. Die Abstandshaltereinrichtungen 9a, 9b, 9c sind insbesondere als Abstandshalterringe 9a, 9b, 9c ausgebildet, welche weiter unten detaillierter beschrieben werden.

Charakteristisch für die Abstandshalterringe/Abstandshaltereinrichtungen 9a, 9b, 9c ist, dass diese mindestens einen Durchgang 14 aufweisen, über den die Staukammern 10a, 10b, 10c mit einem Außenraum 15 außerhalb der Staukammern 10a, 10b, 10c in Verbindung stehen. Über den Durchgang 14 kann innerhalb den Staukammern 10a, 10b, 10c befindliches Medium, z. B. Öl, welches eine oder mehrere der Dichtringe 8a, 8b, 8c, 8d passiert hat, aufgefangen werden und über den Durchgang 14 in den Außenraum 15 abgeleitet werden. Der Außenraum 15 steht über eine Abführleitung 16 z. B. mit einer Saugpumpe (nicht gezeigt) in Verbindung, welche abgestreiftes und abgeschiedenes Medium, z. B. Schmieröl aus dem Außenraum 15 absaugen kann.

Kolbenseitig weist die erfindungsgemäße Dichtungsanordnung 1 als zweites Dichtungsgehäuseteil den Deckel 5 auf, welcher das Gehäuseteil 4 abdeckt und ebenfalls eine Ausnehmung 7 besitzt, durch die die Kolbenstange 105 hindurchgreift.

Der Gehäusedeckel (Dichtungsgehäuseteil 5) ist dabei derart ausgebildet, dass ein aus zumindest zweien, bevorzugt mehreren Dichtungsringen 8a, 8b, 8c, 8c und den korrespondierend dazu vorhandenen Abstandshaltereinrichtungen 9a, 9b, 9c gebildetes Dichtungspaket 20 in Axialrichtung 3 spielfrei oder nahezu spielfrei im Dichtungsgehäuse, bestehend aus dem Dichtungsgehäuseteilen 4 und 5, gehalten ist. Im Folgenden wird das Dichtungspaket 20, welches zumindest aus zwei Dichtungsringen 8a, 8b und aus zumindest einem Abstandshalterring 9a besteht vereinfacht mit dem Bezugszeichen 20 bezeichnet. In einer besonders bevorzugten Ausführungsform kann ein gewellter Federring (nicht gezeigt) vorgesehen sein, welcher beispielsweise zwischen einem Dichtungsring 8b und dem zweiten Dichtungsgehäuseteil die Kolbenstange 105 umgebend angeordnet ist und das Dichtungspaket 20 in Axialrichtung 3 vorspannt.

Des Weiteren kann das Dichtungsgehäuse 4, 5 derart ausgebildet sein, dass die Toleranzen der Dichtungsgehäuseteile 4 und 5 zueinander so gewählt sind, dass ein Dichtungspaket 20 spielfrei oder nahezu spielfrei in Axialrichtung 3 festgelegt sitzt. Als in der Praxis bewährtes Maß für das Gesamtspiel eines Dichtungspakets 20 innerhalb des Dichtungsgehäuses 4, 5 hat sich ein Maß von etwa 0,05 mm bis 0,15 mm, insbesondere 0,05 mm bis 0,1 mm bewährt. Eine solche spielbehaftete Lagerung des Dichtungspakets 20 im Gehäuse kann akzeptiert Werden, da dadurch die Abdichtüngseigenschaften der erfindungsgemäßen Dichtungsanordnung 1 nicht negativ beeinflusst werden. Neben einer solchen mit Spiel behafteten Anordnung des Dichtungspakets 20 im Dichtungsgehäuse 4, 5 kann, auch eine spielfreie bzw. sogar leicht vorgespannte Anordnung gewählt werden. Bei einer vorgespannten Einbausituation des Dichtungspakets 20 im Dichtungsgehäuse 4, 5 ist darauf zu achten, dass die Dichtungsringe 8a, 8b, 8c, 8d minimale radiale Bewegungen der Kolbenstange 105, welche erfahrungsgemäß im Bereich von weniger als einigen 1/10 mm liegen, mitmachen kann und somit eine Aufweitung der Dichtungsringe vermieden ist. Hierdurch kann dann sichergestellt werden, dass in jeder Betriebssituation die Kolbenstange 105 sicher abgedichtet ist.

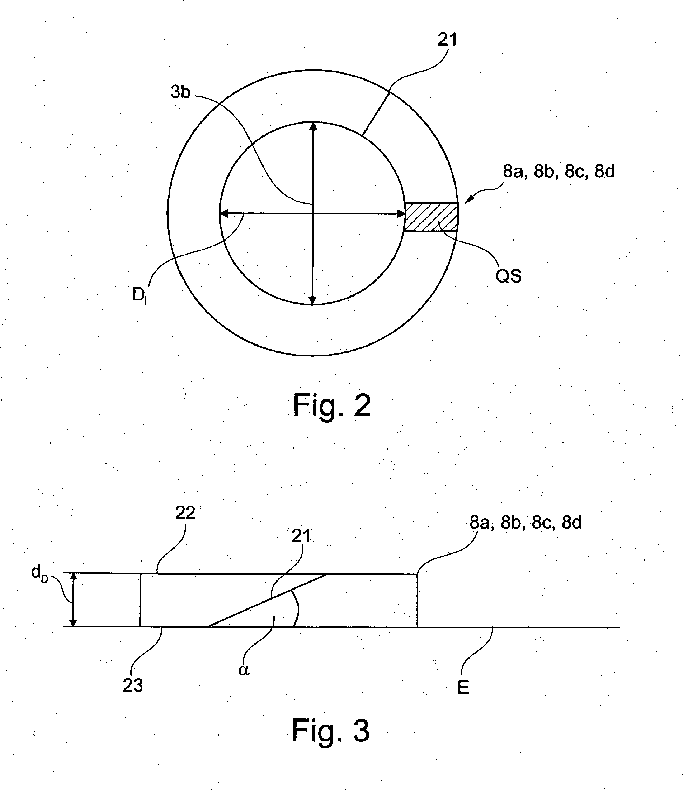

Ein Dichtungsring 8a, 8b, 8c, 8d einer erfindungsgemäßen Dichtungsanordnung 1 ist in der Figur 2 in einer Draufsicht und in der Figur 3 in einer Seitenansicht dargestellt. Ein Dichtungsring 8a, 8b, 8c, 8d weist eine im Wesentlichen ringförmige Raumform mit einem bevorzugt rechteckigen Querschnitt QS auf. Der Dichtungsring 8a, 8b, 8c, 8d weist eine Stoßstelle 21 auf, damit der Dichtungsring 8a, 8b, 8c, 8d in Radialrichtung 3b ein Stück aufweitbar ist und sich so an eine Kolbenstange 105, welche einen geringfügig größeren Außendurchmesser hat als der entspannte Innendurchmesser Dᵢ des Dichtungsrings, vorgespannt anschmiegen kann.

Die Stoßstelle 21 wird hierbei etwas aufgedehnt. Durch Aufbringen von axialen Kräften kann die Stoßstelle 21, welche (vgl. Figur 3) als Schrägschnitt ausgebildet ist wiederum im Betrieb dichtend aneinander gelegt werden. Die Stoßstelle 21 ist bevorzugt als Laserschnitt ausgebildet, wobei der Laserschnitt im Vergleich zur Ebene E des Dichtungsrings 8a, 8b, 8c, 8d einen Winkel α aufweist. Der Winkel α liegt bevorzugt in einem Bereich zwischen 10° bis 45°, insbesondere in einem Bereich zwischen 10° und 30°.

Bei den gegebenen Baugrößen üblicher Hubkolbenmaschinen und den daraus resultierenden Baugrößen der Dichtungsringe 8a, 8b, 8c, 8d hat es sich bewährt, die Stoßstelle 21 als Laserschnitt auszubilden, da hierdurch extrem kleine Schnittfugen realisierbar sind.

Der Durchmesser Dᵢ beträgt bei üblichen schnell laufenden. Hubkolbenmaschinen etwa 15 mm bis 30 mm. Eine Dicke d_{D} der Dichtungsringe 8a, 8b, 8c, 8d liegt in einem Bereich von 1 mm bis 1,8 besonders bevorzugt in einem Bereich zwischen 0,85 mm bis 1,8 mm, idealerweise in einem Bereich zwischen 0,95 mm bis 1,3 mm.

Weiterhin besitzt jeder Dichtungsring 8a, 8b, 8c, 8d eine erste Stirnfläche 22 und eine zweite Stirnfläche 23 mittels denen jeder Dichtungsring entweder mit dem Gehäuseboden 6 oder mit einem Abstandshalterring 9a, 9b, 9c oder mit einem Gehäusedeckel 5 in Kontakt kommt und an diesem anliegt.

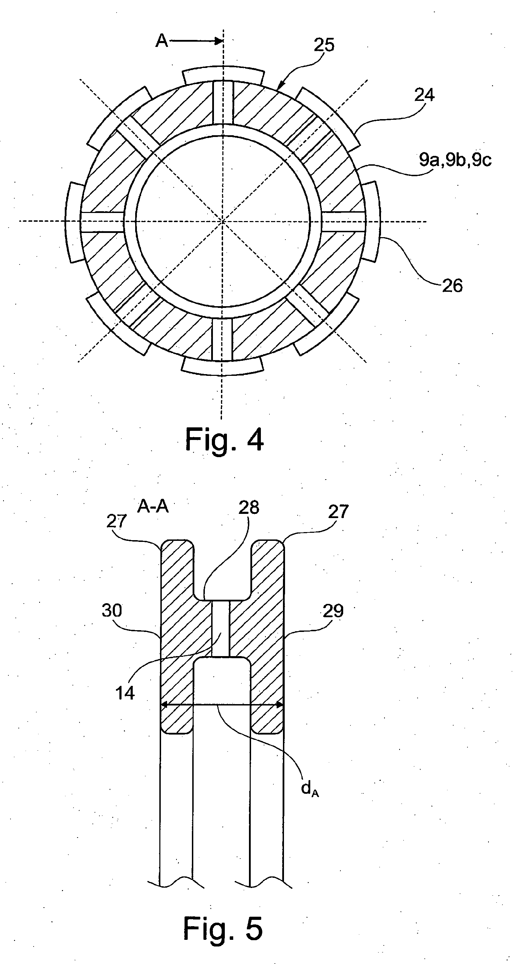

In Figuren 4 und 5 ist beispielhaft anhand einer Äusführungsform die Ausgestaltung einer Abstandshaltereinrichtung, insbesondere eines Abstandshalterrings 9a, 9b, 9c gezeigt. Figur 4 zeigt eine Draufsicht auf einen derartigen Abstandshalterring 9a, 9b, 9c. Es wird deutlich, dass am Außenumfang der Abstandshalterringe 9a, 9b, 9c über den Umfang verteilt zinnenartige Vorsprünge 24 aufweist, die zwischen sich jeweils eine Lücke 25 einschließen. Mit einer Außenumfangskante 26, welche die radial äußerste Begrenzungskante der Vorsprünge 24 ist, sitzen die Abstandshalterringe 9a, 9b, 9c spielfrei oder nahezu spielfrei, ggf. um die Längsachse vedrehbar im ersten Dichtungsgehäuseteil 4.

Radial innenseitig weisen die Abstandshalterringe 9a, 9b, 9c einen Durchmesser auf, der derart deutlich größer als der Außendurchmesser der Kolbenstange 105 gewählt ist, dass eine Berührung der Abstandshalterringe 9a, 9b, 9c an der Kolbenstange 105 nicht stattfinden kann.

Im Querschnitt (Figur 5) besitzen die Abstandshalterringe 9a, 9b, 9c eine im Querschnitt H-förmige Raumform mit vertikalen Stegen 27 und einem horizontalen Quersteg 28. Der Durchgang 14 stellt wie vorbeschrieben die Möglichkeit zur Verfügung, dass Medium (z. B. Öl) aus den Staukammern 10a, 10b, 10c über den Durchgang 14 radial nach außen abfließen kann.

Alternativ dazu können die Abstreiferringe 9a, 9b, 9c auch eine im Querschnitt rechteckige Raumform haben (nicht gezeigt). Zur Sicherstellung der Durchgänge 14 weisen diese Abstandshalterringe an ihren außenseitigen Flachseiten 29 und 30 auf, welche im montierten Zustand mit den Dichtungsringen 8a, 8b, 8c, 8d in Kontakt kommen, rillenartige, radial nach außen verlaufende Vertiefungen auf, beispielsweise Nuten oder Halbrundrillen oder dergleichen. Diese Nuten oder Rillen bilden bei einer solchen Ausführungsform des Abstandshalterrings dann die Durchgänge 14 zur möglichen Entleerung der Staukammern 10a, 10b, 10c.

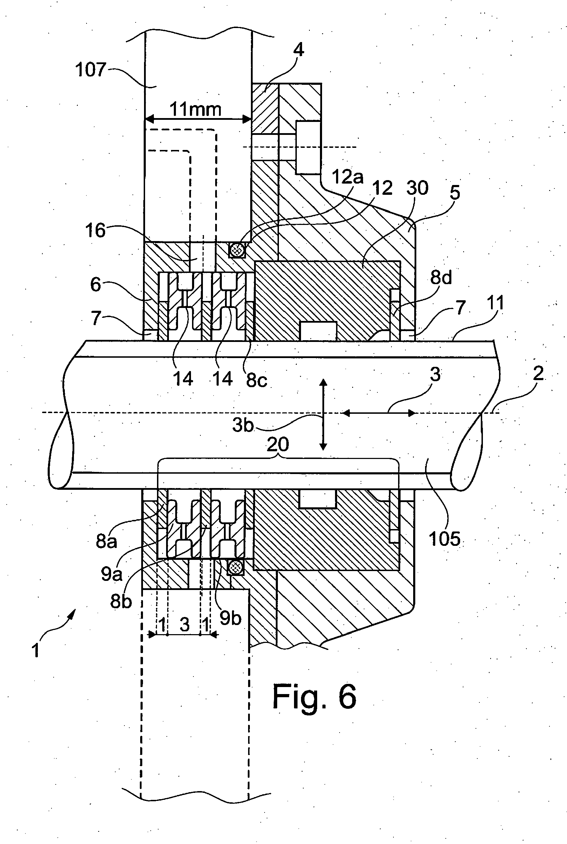

In einer weiteren Ausführungsform der erfindungsgemäßen Dichtungsanordnung gemäß Figur 6 ist einer der Abstandshalterringe, im Ausführungsbeispiel derjenige Abstandshalterring 9c, der kolbenseitig am nächsten angeordnet ist durch eine Radiallagerbuchse 31 ersetzt. Die Radiallagerbuchse 31 sitzt in Axialrichtung zwischen zwei Dichtungsringen 8c und 8d und ersetzt somit die Abstandshaltereinrichtung 9c.

Die Radiallagerbuchse 31 berührt im Gegensatz zu den Abstandshaltereinrichtungen 9a, 9b, 9c in Radialrichtung die Außenoberfläche 11 der Kolbenstange 105 und/oder führt diese in Radialrichtung 3b lagernd, ggf. mit geringem Spiel.

Bevorzugt ist die axiale Längserstreckung einer Radiallagerbuchse 31 in Richtung des Doppelpfeils 3 größer als die axiale Erstreckung eines Abstandshalterrings 9c, so dass hierdurch der Gehäusedeckel 5 im Ausführungsbeispiel entsprechend angepasst ist, so dass die Gesamtanordnung bestehend im Ausführungsbeispiel gemäß Figur 6 aus vier Dichtungsringen, zwei Abstandshalterringen und einer Radiallagerbuchse wiederum spielfrei oder nahezu spielfrei, ggf. auch vorgespannt im Dichtungsgehäuse 4, 5 sitzt.

Bei der erfindungsgemäßen Dichtungsanordnung 1 ist von besonderem Vorteil, dass durch eine Aufeinanderfolge mehrerer Dichtungspakete 20 bestehend jeweils aus zwei Dichtungsringen und einem Abstandshalterring, wobei ein Dichtungsring zweier benachbarter Dichtungspakete 20 zugehörig sein kann, in besonders vorteilhafterweise eine kleine Baugröße realisierbar ist bei verbesserten Dichteigenschaften. Insbesondere bei schnell laufenden Hubkolbenmaschinen, die als Gasmotoren betrieben werden ist es besonders wichtig, dass kein Öl aus dem Kurbelgehäuse in den Raum unterhalb des Kolbenbodens gelangt und somit über zweitaktprinzipbedingte Spülvorgänge in die Brennkammer gelangen kann.

Eine solche hochwirksame Abdichtung des Kurbelgehäuses gegenüber dem Zylinderraum unterhalb des Kolbenbodens kann mit der erfindungsgemäßen Dichtungsanordnung erreicht werden. Dies gelingt auch, obwohl die Dichtungsanordnung hohen pulsierenden Drücken ausgesetzt ist, die beispielsweise beim Einsatz des Raums unterhalb des Kolbenbodens (Zwischenkolbenboden und Trennwand) als Frischgaspumpe für die Brennkraftmaschine auftreten.

Ein besonderer Vorteil der Erfindung ist, dass eine solche Trennwanddichtungsanordnung gemäß der Erfindung mit den beiden Gehäuseteilen 4 und 5 modulartig vormontierbar ist, und als ganzes Modul über eine Kolbenstange einer Brennkraftmaschine oder einer Hubkolbenmaschine gesteckt werden. Die Einzelteile der Dichtung müssen nicht in der Hubkolbenmaschine zusammengesetzt werden. Eine derartige modulartige Ausbildung kleinster Bauart ist ein besonderer Vorteil der vorliegenden Erfindung.

Überraschenderweise hat sich auch gezeigt, dass die Dichtungswirkung der innenspannenden Dichtungsringe derart gut ist, dass räumlich gesehen nur sehr kleine Staukammern 10a bis 10c notwendig sind um abgestreiftes Öl zwischenzulagern, bevor es über den Außenraum und eine Ableiteinrichtung, z. B. eine Absaugpumpe weggefördert wird. Diese Erkenntnis trägt auch dazu bei, dass die erfindungsgemäße Dichtungsanordnung einen hohen Wirkungsgrad hinsichtlich ihrer Abdichtung bei kleiner Baugröße besitzt.

Insbesondere bezieht sich die Erfindung auf eine Dichtungsanordnung für schnell laufende Hubkolbenmaschinen also wie z. B. Kompressoren oder kleine Verbrennungskraftmaschinen und ist insoweit nicht vergleichbar mit den hauptsächlich für langsam laufende Motoren, beispielsweise Schiffsdieseln, bereits aus dem Stand der Technik bekannten Stopfbuchsen.

Derartige Stopfbuchsen sind für kleine Verbrennungsmaschinen genannter Bauart vollkommen ungeeignet, da eine viel zu große axiale Bauhöhe der Stopfbuchsen vorliegt, die in einem schnell laufenden kleinen Verbrennungsmotor nicht unterzubringen sind.

Derartige Stopfbuchsen sind hauptsächlich, wie oben bereits erwähnt, hauptsächlich für langsam laufende Verbrennungskraftmaschinen, beispielsweise Kreuzkopfmotoren und dergleichen bekannt und üblich.

Demgegenüber kann die Erfindung bei schnell laufenden Verbrennungsmotoren ohne Weiteres bis zu Drehzahlen von 1500 bis 8000 Umdrehungen eingesetzt werden. Diese Umdrehungsfrequenz/Umdrehungsdrehzahl entspricht auch der Anzahl der oszillierenden Schwingungsvorgänge, mit der die Kolbenstange 105 durch die Dichtungsanordnung 1 hindurch fährt. Als schnell laufender Verbrennungsmotor gemäß der Erfindung gelten Motoren, deren Nenndrehzahl oberhalb von 1500 bis 2000 Umdrehungen pro Minute liegt. Derartige Motoren können Hubräüme von wenigen Hundert cm³ bis zu 4 1-5 und im Einzelfall sogar darüber aufweisen.

Des Weiteren hat sich herausgestellt, dass eine erfindungsgemäße Dichtungsanordnung im Gegensatz zu den bekannten Stopfbuchsen für langsam laufende Motoren wartungsfrei oder nahezu wartungsfrei einsetzbar ist.

**Bezugszeichenliste**

| | |
|---|---|
| 1 | Dichtungsanordnung |
| 2 | Längsachse |
| 3 | Doppelpfeilrichtung |
| 3b | Radialrichtung/Axialrichtung |
| 4 | erstes Dichtungsgehäuseteil |
| 5 | zweites Dichtungsgehäuseteil |
| 6 | Gehäuseboden |
| 7 | Ausnehmung |
| 8a, 8b, 8c, 8d | Dichtungsringe |
| 9a, 9b, 9c | Abstandhaltereinrichtung/ Abstandshalterringe |
| 10a, 10b, 10c | Staukammern |
| 11 | Außenoberfläche |
| 12 | umlaufende Nuten |
| 12a | O-Ringe |
| 13 | Dichtungskanten |
| 14 | Durchgang |
| 15 | Außenraum |
| 16 | Abführleitung |
| 20 | Dichtungspaket |
| 21 | Stoßstelle |
| 22 | erste Stirnfläche |
| 23 | zweite Stirnfläche |
| 24 | zinnenartige Vorsprünge |
| 25 | Lücke |
| 26 | Außenumfangskante |
| 27 | vertikale Stege |
| 28 | horizontale Querstege |
| 29, 30 | außenseitigen Flachseiten |
| 31 | Radiallagerbuchse |
| 100 | Hubkolbenmaschine |
| 101 | Kurbeltrieb |
| 102 | Kurbelwelle |
| 103 | Gleitstein |
| 104 | Kurbelschlaufe |
| 105 | Kolbenstange |
| 106 | Trennwandlager |
| 107 | Trennwand |
| 108 | Kolben |
| 109 | Zylinderkörper |
| E | Ebene |
| QS | Querschnitt |
| Dᵢ | Innendurchmesser |
| d_{D} | Dicke |
| d_{A} | Dicke |

## Patentansprüche

1. Anordnung zum Abdichten einer sich bezüglich einer Durchtrittsöffnung im Wesentlichen geradlinig hin und her bewegenden Kolbenstange (105) einer Hubkolbenmaschine (100) aufweisend die Kolbenstange (105) umgebende Dichtmittel (8a, 8b, 8c, 8d) nach Art eines innenspannenden Dichtungsrings (8a, 8b, 8c, 8d), der im Bereich der Durchtrittsöffnung bezüglich eines Dichtungsgehäuses (4, 5) im Wesentlichen ortsfest angeordnet ist, wobei zumindest zwei Dichtungsringe (8a, 8b) vorgesehen sind, die in einer Radialrichtung (3b) beweglich, insbesondere schwimmend im Dichtungsgehäuse (4, 5) gelagert sind und zwischen zumindest zwei der Dichtungsringe (8a, 8b, 8c, 8d) ein Abstandshalterring (9a,9b, 9c) angeordnet ist, der radial außenseitig im Dichtungsgehäuse (4, 5) spielfrei oder mit geringem Spiel geführt ist und radial innenseitig zur Kolbenstange (105)ein radial größeres Spiel aufweist und zusammen mit den Dichtungsringen (8a, 8b, 8c, 8d) und der Kolbenstange (105) eine Staukammer (10a, 10b, 10c) für abzudichtendes Medium, z. B. für Öl, bildend die Kolbenstange (105) nicht berührt, insbesondere beabstandet von der Kolbenstange (105) angeordnet ist und der Abstandshalterring (9a, 9b, 9c) zumindest einen Durchgang (14) zum Ableiten von Medium aus der Staukammer (10a, 10b, 10c) heraus aufweist, **dadurch gekennzeichnet, dass** der Außenumfang des Abstandshalterrings (9a, 9b, 9c) einen zinnenförmigen Verlauf aufweist.

2. Anordnung nach Anspruch 1, **dadurch gekennzeichnet, dass** das Dichtungsgehäuse (4, 5) Mittel zum Ableiten von aus der Staukammer (10a, 10b, 10c) ausgetretenem Medium aufweist.

3. Anordnung nach Anspruch 1 oder 2, **dadurch gekennzeichnet, dass** zumindest zwei Dichtungsringe (8a, 8b, 8c, 8d) und zumindest ein Abstandshalterring (9a, 9b, 9c) ein Dichtungspaket (20) bilden, welches in axialer Richtung (3), d. h. in der Bewegungsrichtung der Kolbenstange (105) spielfrei oder nahezu spielfrei im Dichtungsgehäuse (4, 5) sitzt, derart, dass eine radial schwimmende Bewegung der Dichtungsringe (8a, 8b, 8c, 8d) im Betrieb möglich ist.

4. Anordnung nach einem der vorhergehenden Ansprüche, **dadurch gekennzeichnet, dass** das Dichtungspaket (20) axial vorgespannt z. B. mittels eines axial wirkenden Federrings vorgespannt spielfrei im Dichtungsgehäuse (4, 5) sitzt.

5. Anordnung nach einem der vorhergehenden Ansprüche, **dadurch gekennzeichnet, dass** die Dichtungsringe (8a, 8b, 8c, 8d) im Querschnitt etwa rechteckförmig sind und einstückig mit einer einzigen Stoßstelle (21) ausgebildet sind.

6. Anordnung nach einem der vorhergehenden Ansprüche, **dadurch gekennzeichnet, dass** die Stoßstelle (21) ein Schrägschnitt, insbesondere ein Laserschnitt durch den Dichtungsring (8a, 8b, 8c, 8d) ist.

7. Anordnung nach einem der vorhergehenden Ansprüche, **dadurch gekennzeichnet, dass** der Schrägschnitt einen Winkel α zur Ebene des Dichtungsrings (8a, 8b, 8c, 8d) von 10° bis 45°, insbesondere von 10° bis 30° aufweist, um einen großen Überlappungsbereich zu erreichen und die. Dichtungsringe (8a, 8b, 8c 8d) eine Dicke d_{D} von 1 mm. bis 1,8 mm, insbesondere, von 0,85 mm bis 1,8 mm, insbesondere 0,95 mm bis 1,3 mm aufweisen.

8. Anordnung nach einem der vorhergehenden Ansprüche, **dadurch gekennzeichnet, dass** die Abstandshalteringe (9a, 9b, 9c) einen im Wesentlichen H-förmigen Querschnitt aufweisen, wobei die mit ihren Außenseiten den Dichtungsringen (8a, 8b, 8c, 8d) zuweisenden vertikalen Stege (27) zur Anlage mit axialen Stirnseiten (22, 23)der Dichtungsringe (8a, 8b, 8c, 8d) ausgebildet sind.

9. Anordnung nach einem der vorhergehenden Ansprüche, **dadurch gekennzeichnet, dass** ein Quersteg (28) des im Wesentlichen H-förmigen Querschnitts Durchgänge (14), insbesondere Bohrungen aufweist, welche in Radialrichtung (3b) verlaufen.

10. Anordnung nach einem der vorhergehenden Ansprüche, **dadurch gekennzeichnet, dass** eine Vielzahl von Bohrungen (14) über den Umfang verteilt radial, strahlenförmig verlaufend vorgesehen sind.

11. Anordnung nach einem der vorhergehenden Ansprüche, **dadurch gekennzeichnet, dass** die Abstandshalterringe (9a, 9b, 9c) im Querschnitt rechteckförmig ausgebildet sind und an ihren Stirnseiten (22, 23) im Wesentlichen radial nach außen verlaufende Kanäle in Form von Nuten (12) oder anderweitigen rillenartigen Vertiefungen aufweisen.

12. Anordnung nach einem der vorhergehenden Ansprüche, **dadurch gekennzeichnet, dass** ein Gesamtaxiälspiel des Dichtungspaketes (20) im Dichtungsgehäuse (4, 5) etwa 0,05 mm bis 0,15 mm, insbesondere 0,05 mm bis 0,1 mm beträgt.

13. Anordnung nach einem der vorhergehenden Ansprüche, **dadurch gekennzeichnet, dass** zwischen zwei weiteren Dichtungsringen (8a, 8b, 8c, 8d) anstelle oder zusätzlich zu den Abstandshalterringen (9a, 9b, 9c) eine Lagerbuchse (31) eingesetzt ist, die zur radialen Abstützung der Kolbenstange (105) im Bereich der Durchtrittsöffnung dient.

14. Anordnung nach einem der vorhergehenden Ansprüche, **dadurch gekennzeichnet, dass** das Dichtungsgehäuse (4) mittels eines Dichtungsgehäusedeckels (5) verschließbar ist, so dass eine Anordnung zum Abdichten einer sich geradlinig hin und her bewegenden Kolbenstange (105) als Dichtungspaket (20) modulartig beispielsweise an einer Trennwand (107) einer Hubkolbenmaschine (100) montierbar ist.

15. Hubkolbenmaschine, insbesondere aufweisend einen Kurbeltrieb (101) nach Art einer Kurbelschlaufe (104) mit zumindest einer im Wesentlichen linear und geradlinig bewegten Kolbenstange (105) und einer Trennwand (107) zur Abtrennung eines Kurbelgehäuses von einem Zylinderraum zwischen der Trennwand (107) und einem Kolbenboden aufweisend eine Anordnung zum Abdichten gemäß einem der Ansprüche 1 bis 14.

16. Hubkolbenmaschine nach Anspruch 15, **dadurch gekennzeichnet, dass** die Hubkolbenmaschine (100) eine Verbrennungskraftmaschine ist oder ein fremdgetriebenes Aggregat, beispielsweise einen Kompressor ist.

17. Hubkolbenmaschine nach Anspruch 15 oder 16, dadurch ge- V kennzeichnet, dass die Hubkolbenmaschine (100) ein Gasmotor ist.

## Claims

1. A device for sealing a piston rod (105) of a reciprocating piston machine (100), which rod moves back and forth in an essentially linear fashion relative to a through opening, having sealing means (8a, 8b, 8c, 8d) surrounding the piston rod (105) and embodied in the form of an internally clamping sealing ring (8a, 8b, 8c, 8d) that is situated in the region of the through opening in an essentially stationary fashion relative to a seal housing (4, 5); at least two sealing rings (8a, 8b) are provided, which are supported in the seal housing (4, 5) so that they are able to move in a radial direction (3b), particularly in a floating fashion; between at least two of the sealing rings (8a, 8b, 8c, 8d), a spacer ring (9a, 9b, 9c) is provided, whose radial outside is guided without play or with a small amount of play in the seal housing (4, 5) and whose radial inside has a radially larger amount of play relative to the piston rod (105) and which - together with the sealing rings (8a, 8b, 8c, 8d) and the piston rod (105), forming an accumulation chamber (10a, 10b, 10c) for medium that is to be sealed, e.g. for oil - does not touch the piston rod (105) and is in particular situated so that it is spaced apart from the piston rod (105); and the spacer ring (9a, 9b, 9c) has at least one passage (14) for draining off medium from the accumulation chamber (10a, 10b, 10c), **characterized in that** the outer circumference of the spacer ring (9a, 9b, 9c) has a crenelated form.

2. The device according to claim 1, **characterized in that** the seal housing (4, 5) has means for draining off medium that has emerged from the accumulation chamber (10a, 10b, 10c).

3. The device according to claim 1 or 2, **characterized in that** at least two sealing rings (8a, 8b, 8c, 8d) and at least one spacer ring (9a, 9b, 9c) form a seal packet (20) that is supported in the seal housing (4, 5) without play or virtually without play in the axial direction (3), i.e. in the movement direction of the piston rod (105), in such a way as to allow the sealing rings (8a, 8b, 8c, 8d) to move radially in a floating fashion during operation.

4. The device according to one of the preceding claims, **characterized in that** the seal packet (20) is prestressed in the axial direction, e.g. is axially prestressed without play in the seal housing (4, 5) by means of an axially acting split washer.

5. The device according to one of the preceding claims, **characterized in that** the sealing rings (8a, 8b, 8c, 8d) are approximately rectangular in cross-section and are embodied of one piece with a single junction (21).

6. The device according to one of the preceding claims, **characterized in that** the junction (21) is a diagonal cut, in particular a laser cut, through the sealing ring (8a, 8b, 8c, 8d).

7. The device according to one of the preceding claims, **characterized in that** the diagonal cut has an angle α relative to the plane of the sealing ring (8a, 8b, 8c, 8d) of from 10° to 45°, in particular from 10° to 30°, in order to achieve a large overlap region and the sealing rings (8a, 8b, 8c, 8d) have a thickness d_{D} of from 1 mm to 1.8 mm, in particular from 0.85 mm to 1.8 mm, especially from 0.95 mm to 1.3 mm.

8. The device according to one of the preceding claims, **characterized in that** the spacer rings (9a, 9b, 9c) have an essentially H-shaped cross-section and the vertical struts (27) whose outsides are oriented toward the sealing rings (8a, 8b, 8c, 8d) are embodied to contact axial end surfaces (22, 23) of the sealing rings (8a, 8b, 8c, 8d).

9. The device according to one of the preceding claims, **characterized in that** a crossbar (28) of the essentially H-shaped cross-section has openings (14), in particular bores, which extend in the radial direction (3b).

10. The device according to one of the preceding claims, **characterized in that** a large number of bores (14) are provided, which extend out radially like beams distributed over the circumference.

11. The device according to one of the preceding claims, **characterized in that** the spacer rings (9a, 9b, 9c) are embodied as rectangular in cross-section and on their end surfaces (22, 23), have channels in the form of grooves (12) or other flute-like recesses extending outward in an essentially radial fashion.

12. The device according to one of the preceding claims, **characterized in that** a total axial play of the seal packet (20) in the seal housing (4, 5) amounts to for example 0.05 mm to 0.15 mm, in particular 0.05 mm to 0.1 mm.

13. The device according to one of the preceding claims, **characterized in that** between two additional sealing rings (8a, 8b, 8c, 8d), in addition or alternatively to the spacer rings (9a, 9b, 9c), a bearing bush (31) is inserted, which serves to support the piston rod (105) radially in the region of the through opening.

14. The device according to one of the preceding claims, **characterized in that** the seal housing (4) can be sealed by means of the seal housing cover (5) so that an arrangement, which is for sealing a piston rod (105) that moves back and forth in a linear fashion and is embodied in modular form as a seal packet (20), can be mounted, for example, on a dividing wall (107) of a reciprocating piston machine (100).

15. A reciprocating piston machine, in particular having a crank mechanism (101) embodied in the form of a sliding crank (104) with at least one piston rod (105) that moves back and forth in an essentially linear and rectilinear fashion and a dividing wall (107) for dividing a crank housing from a cylinder chamber between the dividing wall (107) and a piston bottom, having a sealing device according to one of claims 1 through 14.

16. The reciprocating piston machine according to claim 15, **characterized in that** the reciprocating piston machine (100) is an internal combustion engine or an externally driven subassembly such as a compressor.

17. The reciprocating piston machine according to claim 15 or 16, **characterized in that** the reciprocating piston machine (100) is a gas motor.

## Revendications

1. Ensemble d'étanchéité destiné à étancher une tige de piston (105) d'un moteur à piston alternatif (100), laquelle se déplace en va-et-vient sensiblement en ligne droite par rapport à une ouverture de passage, comprenant des moyens d'étanchéité (8a, 8b, 8c, 8d) entourant la tige de piston (105) à la manière d'une bague d'étanchéité (8a, 8b, 8c, 8d) à serrage interne qui est agencée de façon sensiblement stationnaire par rapport à un boîtier d'étanchéité (4, 5) au niveau de l'ouverture de passage, dans lequel sont prévues au moins deux bagues d'étanchéité (8a, 8b) qui sont montées de façon mobile dans une direction radiale (3b), en particulier en flottement dans le boîtier d'étanchéité (4, 5), et une bague d'écartement (9a, 9b, 9c) est agencée entre deux au moins des bagues d'étanchéité (8a, 8b, 8c, 8d), qui est menée radialement du côté extérieur sans jeu ou avec un faible jeu dans le boîtier d'étanchéité (4, 5) et qui présente radialement du côté intérieur vers la tige de piston (105) un jeu radial plus grand et ne vient pas toucher la tige de piston (105) en formant, conjointement avec les bagues d'étanchéité (8a, 8b, 8c, 8d) et la tige de piston (105), une chambre de refoulement (10a, 10b, 10c) pour un fluide à étancher, par exemple pour de l'huile, et est agencée en particulier à distance de la tige de piston (105), et la bague d'écartement (9a, 9b, 9c) présente au moins un passage (14) destiné à évacuer le fluide hors de la chambre de refoulement (10a, 10b, 10c), **caractérisé en ce que** la périphérie extérieure de la bague d'écartement (9a, 9b, 9c) présente un tracé crénelé.

2. Ensemble selon la revendication 1, **caractérisé en ce que** le boîtier d'étanchéité (4, 5) comprend des moyens d'évacuation du fluide sorti de la chambre de refoulement (10a, 10b, 10c).

3. Ensemble selon la revendication 1 ou 2, **caractérisé en ce qu'**au moins deux bagues d'étanchéité (8a, 8b, 8c, 8d) et au moins une bague d'écartement (9a, 9c, 9c) constituent une garniture d'étanchéité (20) qui, en direction axiale (3), c'est-à-dire en direction de déplacement de la tige de piston (105), se situe sans jeu ou pratiquement sans jeu dans le boîtier d'étanchéité (4, 5) de manière à permettre un mouvement flottant radial des bagues d'étanchéité (8a, 8b, 8c, 8d) pendant le fonctionnement.

4. Ensemble selon l'une des revendications précédentes, **caractérisé en ce que** la garniture d'étanchéité (20) se situe sans jeu dans le boîtier d'étanchéité (4, 5) en étant précontrainte axialement, par exemple au moyen d'un anneau élastique à effet axial.

5. Ensemble selon l'une des revendications précédentes, **caractérisé en ce que** les bagues d'étanchéité (8a, 8b, 8c, 8d) présentent une section transversale de forme approximativement rectangulaire et sont réalisées d'un seul tenant avec un unique emplacement de jointure (21).

6. Ensemble selon l'une des revendications précédentes, **caractérisé en ce que** l'emplacement de jointure (21) est une coupe oblique, en particulier une coupe laser à travers la bague d'étanchéité (8a, 8b, 8c, 8d).

7. Ensemble selon l'une des revendications précédentes, **caractérisé en ce que** la coupe oblique présente un angle α par rapport au plan de la bague d'étanchéité (8a, 8b, 8c, 8d) de 10° à 45°, en particulier de 10° à 30°, afin d'obtenir une grande zone de chevauchement, et les bagues d'étanchéité (8a, 8b, 8c, 8d) présentent une épaisseur d_{D} de 1 mm à 1,8 mm, en particulier de 0,85 mm à 1,8 mm, en particulier de 0,95 mm à 1,3 mm.

8. Ensemble selon l'une des revendications précédentes, **caractérisé en ce que** les bagues d'écartement (9a, 9b, 9c) présentent une coupe transversale sensiblement en forme de H, les branches verticales (27) ayant leurs faces extérieures tournées vers les bagues d'étanchéité (8a, 8b, 8c, 8d) et étant réalisées pour venir en appui avec des faces frontales axiales (22, 23) des bagues d'étanchéité (8a, 8b, 8c, 8d).

9. Ensemble selon l'une des revendications précédentes, **caractérisé en ce qu'**une âme transversale (28) de la section transversale sensiblement en forme de H présente des passages (14), en particuliers des trous percés qui s'étendent en direction radiale (3b).

10. Ensemble selon l'une des revendications précédentes, **caractérisé en ce qu'**il est prévu une multitude de trous percés (14) répartis sur la périphérie en s'étendant radialement en forme de rayons.

11. Ensemble selon l'une des revendications précédentes, **caractérisé en ce que** les bagues d'écartement (9a, 9b, 9c) sont réalisées avec une section transversale de forme rectangulaire et présentent sur leurs faces frontales (22, 23) des canaux s'étendant sensiblement radialement vers l'extérieur en forme de gorges (12) ou en forme de renfoncements d'autre type formant rainures.

12. Ensemble selon l'une des revendications précédentes, **caractérisé en ce qu'**un jeu axial total de la garniture d'étanchéité (20) dans le boîtier d'étanchéité (4, 5) est d'environ 0,05 mm à 0,15 mm, en particulier de 0,05 mm à 0,1 mm.

13. Ensemble selon l'une des revendications précédentes, **caractérisé en ce qu'**il est prévu entre deux autres bagues d'étanchéité (8a, 8b, 8c, 8d), à la place des bagues d'écartement (9a, 9b, 9c) ou en supplément à celles-ci, un coussinet (31) qui sert à l'appui radial de la tige de piston (105) au niveau de l'ouverture de passage.

14. Ensemble selon l'une des revendications précédentes, **caractérisé en ce que** le boîtier d'étanchéité (4) est susceptible d'être refermé au moyen d'un couvercle (5) de boîtier d'étanchéité, de sorte qu'un ensemble destiné à étancher une tige de piston (105) qui se déplace en va-et-vient en ligne droite est susceptible d'être monté en tant que garniture d'étanchéité (20) de façon modulaire par exemple sur une cloison de séparation (107) d'un moteur à piston alternatif (100).

15. Moteur à piston alternatif, comprenant en particulier un mécanisme à manivelle (101) du type système manivelle-cadre (104) pourvu d'au moins une tige de piston (105) déplacée sensiblement linéairement et en ligne droite et d'une cloison de séparation (107) destinée à séparer un carter de moteur d'une chambre de cylindre entre la cloison de séparation (107) et une tête de piston, comprenant un ensemble d'étanchéité selon l'une des revendications 1 à 14.

16. Moteur à piston alternatif selon la revendication 15, **caractérisé en ce que** le moteur à piston alternatif (100) est un moteur à combustion interne ou une unité à moteur externe, par exemple un compresseur.

17. Moteur à piston alternatif selon la revendication 15 ou 16, **caractérisé en ce que** le moteur à piston alternatif (100) est un moteur à gaz.
